# EUROPEAN PATENT SPECIFICATION

(11) **EP 2 871 391 B1**
(45) Date of publication and mention of the grant of the patent: **18.10.2017**
(21) Application number: 13813638.7
(22) Date of filing: 05.07.2013
(51) Int. Cl.: F16J 15/12

(54) **SPIRAL GASKET**
SPIRALDICHTUNG
JOINT SPIRALÉ

(30) Priority: 06.07.2012 JP 2012152036
(43) Date of publication of application: 13.05.2015
(73) Proprietor: Kabushiki Kaisha Toshiba, Minato-ku Tokyo 105-8001 (JP); NIPPON PILLAR PACKING CO. LTD., Osaka (JP)
(72) Inventor: ASAKURA Daisuke, Tokyo 105-8001 (JP); TAKAHASHI Takeo, Tokyo 105-8001 (JP); MIYOSHI Takeshi, Osaka-shi Osaka 532-0022 (JP); MAEDA Hisashi, Osaka-shi Osaka 532-0022 (JP)
(74) Representative: Dantz, Jan Henning
(86) International application number: PCT/JP2013/068493
(87) International publication number: WO 2014/007364

(56) References cited:
- JP-A- H03 177 660
- JP-U- S 558 242
- JP-U- S5 911 953
- JP-U- S6 097 459
- US-A- 3 506 242

## Description

### TECHNICAL FIELD

The present invention relates to a spiral gasket including a sealing portion that includes a metal hoop member that has a cross-sectional shape including bent parts and is spirally wound around to have a plurality of winds such that the bent parts of the winds overlap one another; and a filler member located between the winds of the metal hoop member in a radial direction.

### BACKGROUND ART

In general, a spiral gasket as described above includes a metal hoop member formed of a metal thin plate, a cross-sectional shape of which includes generally V-shaped bent parts, and a filler member acting as a cushioning member. The metal hoop member and the filler member are spirally wound around together to form a sealing portion. The spiral gasket having such a structure seals, for example, a gap between flanges of pipes in which steam or any other type of gas or liquid (i.e., fluid) flows, or a gap between connection surfaces of any other fluid device such as a valve or the like. See e.g. JP-S6097459U or US-A-2012/0038114.

Conventional spiral gaskets usable at high temperature have various structures. One known example of spiral gasket is as follows. The metal hoop member is formed of stainless steel, Inconel (registered trademark) or the like, and the filler member is formed of expanded graphite (produced by treating highly pure natural scale-like graphite crystal with a chemical and heat-treating the resultant substance at a temperature as high as 1000°C or higher to expand gaps between layers of crystal lattice of graphite, thus to form flakes). Another known example of spiral gasket, which is proposed in Patent Document 1, is as follows. The metal hoop member and the filler member are stacked together and spirally wound around. A radially inner portion and a radially outer portion of the filler member are formed of a mica tape, and a central portion of the filler member between the radially inner portion and the radially outer portion is formed of an expanded graphite tape. The mica tape is produced as follows. Mica paper obtained by aggregating mica foil is bonded to inorganic fiber cloth formed of inorganic fiber, and thus is reinforced.

The former spiral gasket containing expanded graphite has a risk that when the temperature exceeds 450°C in an oxidizable atmosphere, the expanded graphite is gradually oxidized and extinguished. This problem can be addressed as follows. An attachment portion to which the spiral gasket is to be attached is caused to have a closed structure, namely, the gasket attachment portion is shielded from the outer air (i.e., oxygen) to have a non-oxidizable, so that the highest temperature in which the spiral gasket is usable is raised. However, there is knowledge that expanded graphite is gradually vaporized and oxidized when being exposed to steam having a temperature exceeding 650°C. Thus, this type of spiral gasket has room for improvement.

The latter spiral gasket contains an organic material such as rubber or the like as a binder in the mica tape reinforced by the bonded inorganic fiber cloth, namely, in the inorganic filler. The organic material is quickly deteriorated when being heated. This deteriorates the sealability of the inorganic filler. This allows invasion of the outer air (oxygen), and thus the expanded graphite that is contained in the filler member together with the inorganic filler is oxidized. This may deteriorate the sealing performance of the gasket.

Apart from the spiral gaskets, metal gaskets such as metallic hollow O-rings, metal solid gaskets and the like are generally known.

Such a metal gasket is poorer in compression recoverability than a spiral gasket. Therefore, when the gasket attachment portion at connection portion of flanges of pipes or other fluid devices is thermally expanded and contracted repeatedly by such a fluid device being driven and stopped in repetition, the gasket cannot sufficiently follow the change in the gap between the attachment surfaces (namely, cannot sufficiently follow the temperature change). This causes a problem that the sealing performance of the gasket is deteriorated.

### CITATION LIST

### PATENT LITERATURE

Patent Document 1: Japanese Laid-Open Patent Publication No. Hei 11-351399

### SUMMARY OF INVENTION

### TECHNICAL PROBLEM

The present invention has an object of providing a spiral gasket that is less influenced by thermal deterioration of a part of members thereof in high-temperature and high-pressure conditions than a conventional spiral gasket and thus is guaranteed to have stable sealing performance for a long time.

### SOLUTION TO PROBLEM

This object is solved by a spiral gasket having the features of claims 1. The present invention is directed to a spiral gasket, including a sealing portion including a metal hoop member that has a cross-sectional shape including bent parts and is spirally wound around to have a plurality of winds such that the bent parts of the winds overlap one another; and a filler member located between the winds of the metal hoop member in a radial direction. At least a part of the filler member in a spiral direction is formed of a non-iron metal material having deformability that is higher than that of the metal hoop member.

In the above-described structure, the sealing portion includes the metal hoop member that has a cross-sectional shape including bent parts and is spirally wound around to have a plurality of winds such that the bent parts of the winds overlap one another; and the filler member located between the winds of the metal hoop member in a radial direction. This indicates that the sealing portion has the following structure. The metal hoop member and the filler member are stacked together and wound around, and as a result, the filler member is located between the winds of the metal hoop member in the radial direction. Alternatively, the filler member that is spirally wound around is located between a radially outer portion and a radially inner portion of the metal hoop member that is spirally wound around.

The cross-sectional shape may be, for example, generally V-shaped, generally U-shaped or generally W-shaped, and the bent parts may be, for example, curved or folded parts at, or in the vicinity of, the center of the cross-section.

The "at least a part of the filler member in a spiral direction" may be the entire length or a part thereof in the spiral direction or a plurality of parts located at an interval, for example, a radially outer part or a radially inner part.

The expression "deformability that is higher than that of the metal hoop member" indicates that the at least a part of the filler member is lower in hardness or higher in flexibility and stretchability than those of the metal hoop member, and thus is deformed more easily than the metal hoop member when being supplied with an equal force.

Examples of the non-iron metal material having deformability that is higher than that of the metal hoop member include nickel, nickel alloys, titanium, titanium alloys and the like, but are not limited to these, needless to say. In more detail, such a non-iron metal material may be a metal material containing an iron component as long as the main component thereof is a metal material other than iron.

The spiral gasket according to this invention is less influenced by thermal deterioration of a part of members thereof in high-temperature and high-pressure conditions than a conventional spiral gasket and thus is guaranteed to have stable sealing performance for a long time.

This will be described in more detail. At least a part of the filler member in the spiral direction is formed of a non-iron metal material having deformability that is higher than that of the metal hoop member. Therefore, the spiral gasket according to this invention is less influenced by thermal deterioration of a part of members thereof in high-temperature and high-pressure conditions than a conventional spiral gasket and is guaranteed to have sufficient compressibility and sufficient recoverability, which are inherent characteristics of a spiral gasket. Therefore, the spiral gasket is guaranteed to have stable sealing performance for a long time.

Since sufficient compressibility is guaranteed, even when the spiral gasket is attached to a gasket attachment portion and a size thereof in a thickness direction is decreased, the spiral gasket can be sufficiently deformed without being buckled. Thus, the spiral gasket is well fit to the attachment surface. Since sufficient recoverability is guaranteed, even when the distance between the attachment surfaces is decreased or increased by the thermal expansion and contraction, the spiral gasket can be sufficiently follow the changing distance. Namely, the spiral gasket is guaranteed to follow the temperature change in the conditions of use.

Therefore, the spiral gasket is less influenced by thermal deterioration when being heated than a conventional spiral gasket and thus is guaranteed to have stable sealing performance for a long time in high-temperature and high-pressure conditions.

In an embodiment of the present invention, the filler member in the sealing portion may be formed of only the non-iron metal material.

The spiral gasket provided according to the present invention is improved in heat resistance and corrosion guaranteed at high temperature while being guaranteed to have stable sealing performance.

This will be described in more detail. The filler member, which is formed of only the non-iron metal material, is not deteriorated or extinguished even in high-temperature and high-pressure conditions. In addition, such a filler member has higher deformability than that of the metal hoop member, and thus provides compressibility and recoverability. Therefore, the spiral gasket is improved in heat resistance and corrosion guaranteed at high temperature while being guaranteed to have stable sealing performance.

In an embodiment of the present invention, a radially outer portion and a radially inner portion of the filler member in the sealing portion may be formed of the non-iron metal material; and a portion of the filler member between the radially inner portion and the radially outer portion may be formed of expanded graphite.

The "radially outer portion and the radially inner portion of the filler member in the sealing portion" may be respectively a part of an outer portion and a part of an inner portion of the spirally wound filler member in the radial direction.

The "portion of the filler member between the radially inner portion and the radially outer portion" may be a portion between the part of the outer portion and the part of the inner portion of the spirally wound filler member in the radial direction.

The spiral gasket provided according to the present invention has high durability while providing the high sealability of the expanded graphite.

This will be described in more detail. The filler member formed of the non-iron metal material is provided in the radially outer portion and the radially inner portion. Therefore, the filler member that is formed of expanded graphite, which is highly cushionable, and is located between the radially outer portion and the radially inner portion is suppressed from being oxidized and extinguished. Thus, the spiral gasket has high durability while providing the high sealability of the expanded graphite.

In an embodiment of the present invention, the sealing portion may be formed as a result of only the filler member formed of the non-iron metal material being spirally wound around.

The spiral gasket provided according to the present invention is less influenced by thermal deterioration of a part of members thereof in high-temperature and high-pressure conditions than a conventional spiral gasket and thus is improved in heat resistance and corrosion guaranteed at high temperature, while being guaranteed to have stable sealing performance for a long time.

This will be described in more detail. The sealing portion is formed as a result of only the filler member formed of the non-iron metal material being spirally wound around. Therefore, the spiral gasket is less influenced by thermal deterioration of a part of members thereof in high-temperature and high-pressure conditions than a conventional spiral gasket, and is guaranteed to have sufficient compressibility and sufficient recoverability, which are inherent characteristics of a spiral gasket. In addition, a gap made between the wound members is minimized. Thus, stable sealing performance is guaranteed for a long time.

The filler formed of the non-iron metal material that is located in the central portion between the radially outer portion and the radially inner portion of the sealing portion is highly deformable. Therefore, the gap made between overlapping winds of the filler member is small. This prevents fluids from permeating into the gap and thus provides high sealability. In addition, the filler member formed of the non-iron metal material maintains the shape thereof better than a soft material such as expanded graphite, an inorganic material or the like, and thus is guaranteed to have sufficient compressibility and sufficient recoverability, which are inherent characteristics of a spiral gasket.

Therefore, the spiral gasket is less influenced by thermal deterioration when being heated than a conventional spiral gasket and thus is improved in heat resistance and corrosion guaranteed at high temperature, while being guaranteed to have stable sealing performance for a long time.

In an embodiment of the present invention, a filling member may be located at a position corresponding to the bent parts of the overlapping winds.

The "position corresponding to the bent parts of the overlapping winds" conceptually encompasses a position between a bent part of a wind of the spirally wound filler member and a bent part of a corresponding wind of the spirally wound metal hoop member, and also a position between the bent parts of the overlapping winds of the spirally wound filler member.

The "filling member" conceptually encompasses a linear metal filling member, a paste-like filling member and a sheet-like filling member that have deformability higher than or at least equivalent to that of the filler member formed of the non-iron metal material.

The spiral gasket provided according to the present invention prevents fluids from permeating into the gap and thus has more stable and higher sealability.

This will be described in more detail. Even when a gap is formed between overlapping surfaces of bent parts of the metal hoop member and the filler member, or between overlapping surfaces of the bent parts of adjacent winds of the filler member, the gap is filled. Therefore, the spiral gasket suppresses a fluid such as steam having high temperature and high pressure or the like from permeating into the gap extending in the spiral direction and thus prevents such permeation more certainly.

In an embodiment of the present invention, a metal plating layer may be provided on at least one end surface of the sealing portion in a thickness direction of a gasket main body.

The "at least one end surface in a thickness direction of a gasket main body" conceptually encompasses only one of, and both of, two surfaces of a generally donut-shaped gasket main body formed by spirally winding around the metal hoop member and the filler member, and also encompasses the entirety of, or a part of, one or both of the two surfaces.

The spiral gasket provided according to the present invention suppresses fluid permeation with more certainty and thus has more stable and higher sealability.

This will be described in more detail. It is assumed that a gap is formed in the sealing portion formed of the metal hoop member and the filler member, or in the sealing portion formed of only the filler member; more specially, it is assumed that a gap is formed between overlapping surfaces of the metal hoop member and the filler member or between overlapping surfaces of adjacent winds of the filler member in the vicinity of an end surface of the sealing portion. Even in such a case, the metal plating layer formed at least on one end surface in the thickness direction of the gasket main body fills such a gap. In addition, the metal plating layer improves the adherence between the metal hoop member and the filler member or between the winds of the filler member.

Even when the gasket attachment surface and the sealing portion are not fit well to each other at the contact interface at the time of use of the spiral gasket, the metal plating layer improves the fitness. Therefore, the metal plating further prevents fluid permeation with more certainty.

In an embodiment of the present invention, the non-iron metal material may be nickel.

The spiral gasket provided by the present invention is highly durable without being thermally influenced almost at all in high-temperature and high-pressure conditions.

This will be described in more detail. Among various non-iron metal material, nickel is a soft metal material that has a high boiling point of 1455°C and is high in heat resistance and corrosion resistance at high temperature. Use of nickel as the filler member allows the spiral gasket having compressibility and recoverability to be used in high-temperature and high-pressure conditions. Such a spiral gasket is highly durable without being thermally influenced almost at all in high-temperature and high-pressure conditions.

### ADVANTAGEOUS EFFECTS OF INVENTION

The present invention provides a spiral gasket that is less influenced by thermal deterioration of a part of members thereof in high-temperature and high-pressure conditions than a conventional spiral gasket and thus is guaranteed to have stable sealing performance for a long time.

### BRIEF DESCRIPTION OF DRAWINGS

[FIG. 1] FIG. 1 is a plan view of a spiral gasket according to the present invention.
[FIG. 2] FIG. 2 is a cross-sectional view taken along line A-A in FIG. 1.
[FIG. 3] FIG. 3 is a schematic cross-sectional view of a gasket attachment portion having a closed structure.
[FIG. 4] FIG. 4 is an enlarged schematic cross-sectional view of the spiral gasket attached to the gasket attachment portion.
[FIG. 5] FIG. 5 shows a spiral gasket production device.
[FIG. 6] FIG. 6 is a partially enlarged schematic cross-sectional view of a sealing portion wound by the spiral gasket production device.
[FIG. 7] FIG. 7 shows examples of use of the spiral gasket.
[FIG. 8] FIG. 8 shows various patterns of spiral gasket.
[FIG. 9] FIG. 9 is a one-side cross-sectional view of a spiral gasket in another example.
[FIG. 10] FIG. 10 is a one-side cross-sectional view of a spiral gasket in still another example.
[FIG. 11] FIG. 11 is a one-side cross-sectional view of a spiral gasket in still another example.
[FIG. 12] FIG. 12 is a partial enlarged cross-sectional view of an attached state of the spiral gasket shown in FIG. 11.
[FIG. 13] FIG. 13 is a one-side cross-sectional view of a spiral gasket in still another example.
[FIG. 14] FIG. 14 is a one-side cross-sectional view of a spiral gasket in still another example.
[FIG. 15] FIG. 15 is a one-side cross-sectional view of a spiral gasket in still another example.

### DESCRIPTION OF EMBODIMENTS

The present invention has an object of providing a spiral gasket that is less influenced by thermal deterioration of a part of members thereof in high-temperature and high-pressure conditions than a conventional spiral gasket and thus is guaranteed to have stable sealing performance for a long time. This object is achieved by a spiral gasket including a sealing portion including a metal hoop member that has a cross-sectional shape including bent parts and is spirally wound around to have a plurality of winds such that the bent parts of the winds overlap one another; and a filler member located between the winds of the metal hoop member in a radial direction; wherein at least a part of the filler member in a spiral direction is formed of a non-iron metal material having deformability that is higher than that of the metal hoop member.

### Example 1

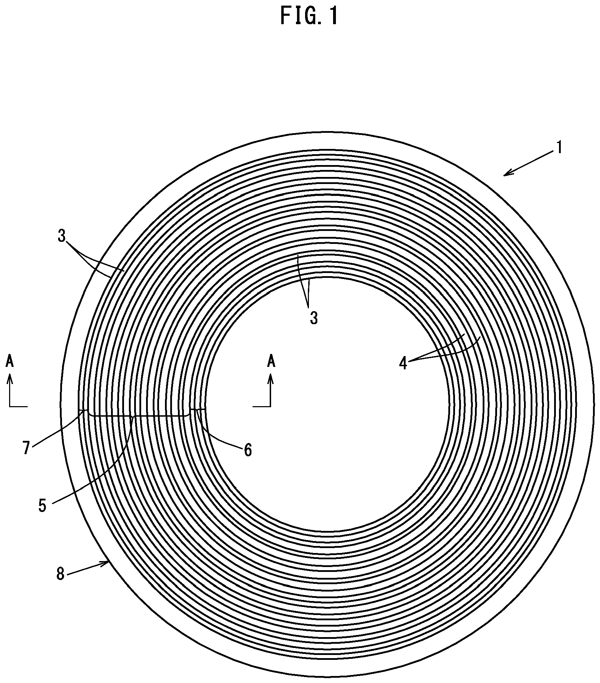

An example of the present invention will be described with reference to FIG. 1 through FIG. 6.

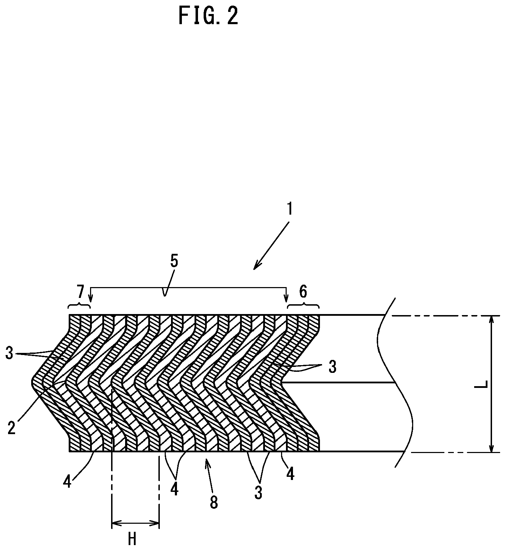

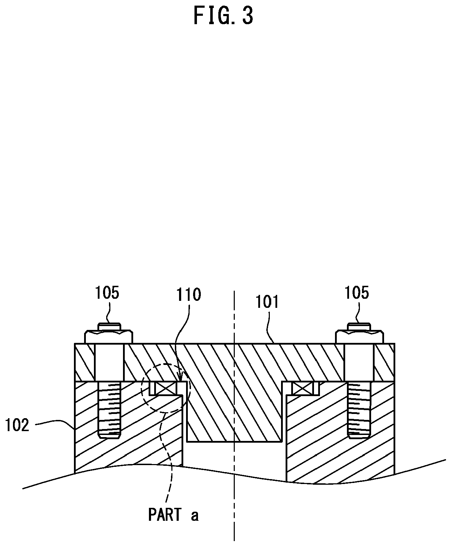

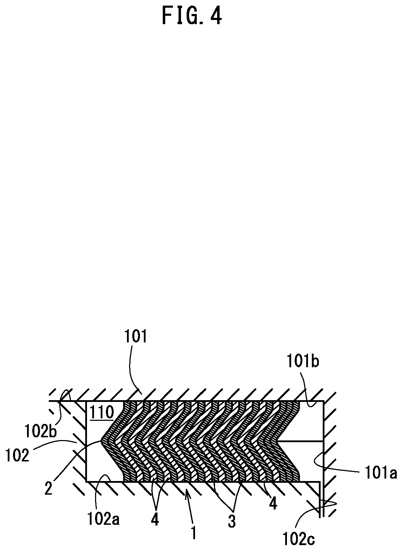

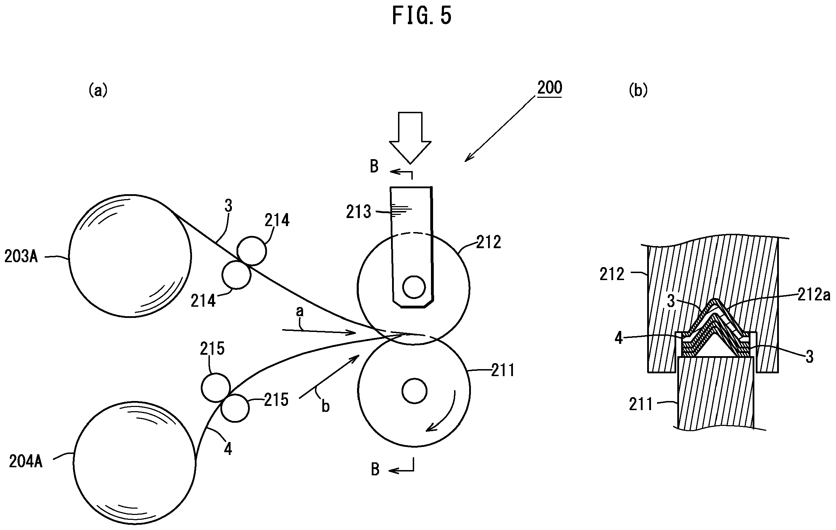

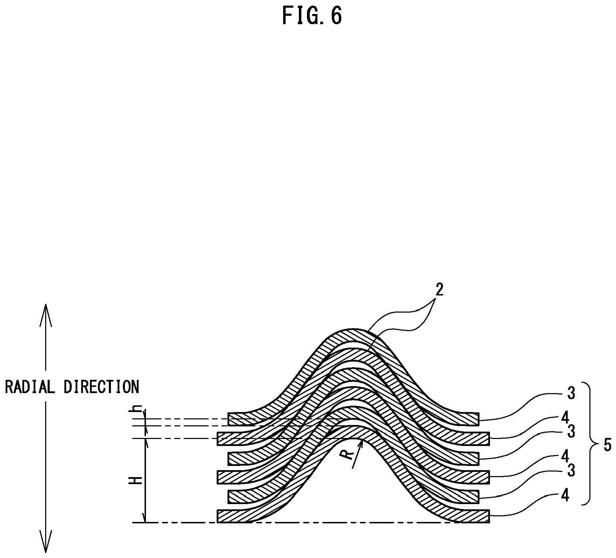

FIG. 1 is a plan view of a spiral gasket 1 according to the present invention. FIG. 2 is a cross-sectional view taken along line A-A in FIG. 1. FIG. 3 is a schematic cross-sectional view of a gasket attachment portion 110 having a closed structure. FIG. 4 is an enlarged schematic cross-sectional view of the spiral gasket 1 attached to the gasket attachment portion 110. FIG. 5 shows a spiral gasket production device 200. FIG. 6 is a partially enlarged schematic cross-sectional view of a sealing portion 5 wound by the spiral gasket production device 200.

In more detail, FIG. 5 (a) is a schematic side view of the spiral gasket production device, and FIG. 5(b) is a cross-sectional view taken along line B-B in FIG. 5(a).

The spiral gasket 1 is attached to a gasket attachment portion of a flange of a pipe or a connection portion of any other fluid device. The spiral gasket 1 is attached to, for example, the gasket attachment portion 110 having a closed structure shown in FIG. 3. In more detail, the spiral gasket 1 is attached to the gasket attachment portion 110 (see FIG. 4), which is ring-shaped as seen in a plan view and includes a bottom end protruding radially outer surface 101a and a bottom end surface 101b of a top lid member 101, a top end surface 102b of an opening member 102, and a top end groove 102a formed in the top end surface 102a.

FIG. 4 is an enlarged view of part "a" in FIG. 3. As shown in FIG. 4, the spiral gasket 1 attached to the gasket attachment portion 110 works as follows. The top lid member 101 and the opening member 102 are tightened by a tightening bolt 105. A tightening force of the tightening bolt 105 causes a metal touch state of the top end surface 102b and the bottom end surface 101b, and thus the gasket attachment portion 110 is shielded from the outer air, namely, is put into a non-oxidizable atmosphere. In this state, the spiral gasket 1 provides sealing against a high-temperature high-pressure fluid entering a gap between a radially inner surface 102c of the opening member 102 and the bottom end protruding radially outer surface 101a of the top lid member 101.

The spiral gasket 1 includes a gasket main body 8, which includes a sealing portion 5 and winding portions 6 and 7 and is kept in a generally donut shape.

The sealing portion 5 includes a metal hoop member 3 formed of a metal thin plate having a generally V-shaped cross-sectional shape, namely, generally V-shaped bent parts 2, and a filler member 4 acting as a cushioning member. The sealing portion 5 has the following structure. The metal hoop member 3 is spirally wound around to have a plurality of winds such that the bent parts 2 of the winds overlap one another, and the filler member 4 is located between the winds in a radial direction.

The winding portions 6 and 7 are formed as follows. In a radially inner portion and a radially outer portion, only the metal hoop member 3 is wound around to form two or three winds. The winding-start part is fixed to the adjacent, namely, immediately outer, wind of the metal hoop member 3 by spot welding. The winding-finish part is fixed to the adjacent, namely, immediately inner, wind of the metal hoop member 3 by spot welding.

The metal hoop member 3 is formed of, for example, Inconel X-750 or the like. Inconel X-750 is a nickel alloy that has a melting point of 1395 to 1425°C and is high in heat resistance, corrosion resistance and strength at high temperature.

The filler member 4 is formed of nickel, which is a soft non-iron metal material that is more deformable than the metal hoop member 3 (Inconel X-750) and is high in heat resistance and corrosion resistance even at high temperature.

In more detail, the nickel, which is lower in hardness and higher in flexibility and stretchability than Inconel X-750 used to form the metal hoop member 3, is used as a non-iron metal material having high deformability.

In example 1, the non-iron metal material is pure nickel (desirably, pure nickel; hereinafter, pure nickel may be comprehensively referred to simply as "nickel"). The filler member 4 is entirely formed of nickel in the spiral direction.

The metal hoop member 3 has a thickness that is set to a predetermined value in the range of 0.1 to 0.3 mm (e.g., 0.2 mm). The metal hoop member 3 has a width that is set to a predetermined value in the range of 4 to 7 mm.

The filler member 4 formed of a non-iron metal material (nickel) has a thickness that is set to a predetermined value in the range of 0.1 to 0.4 mm (e.g., 0.2 mm). The minimum possible thickness of the filler member 4 is set to 0.1 mm in consideration of the ease of handling thereof, and the maximum minimum possible thickness of the filler member 4 is set to 0.4 mm in consideration of the deformability thereof. The filler member 4 has a width that is set to a predetermined value in the range of 4 to 7 mm. It should be noted that the width of the filler member 4 is set to be slightly larger than the width of the metal hoop member 3 so that when the metal hoop member 3 and the filler member 4 are stacked together and wound around, ends of the filler member 4 slightly protrude from ends of the metal hoop member 3 (see FIG. 6). Such an arrangement is made in consideration of the fitness of the attachment surface of the gasket attachment portion 110 and the sealing portion 5 at a contact interface thereof (i.e., contact interface of the bottom surface 101b or a bottom surface of the top end groove 102a and the sealing portion 5).

As shown in FIG. 2, the bent parts 2 of the metal hoop member 3 and bent parts 2 of the filler member 4 are set to have a peak height H of 1.6 mm, and the gasket main body 8 is set to have a nominal thickness L that is set to a predetermined value in the range of 3 to 5 mm (e.g., 4.5 mm).

These size values are merely examples, and the above-described sizes are not limited to these values.

The spiral gasket 1 having the above-described structure is produced by, for example, the spiral gasket production device 200 as shown in FIG. 5. The spiral gasket production device 200 includes a winding core 211 around which the metal hoop member 3 and the filler member 4 stacked together are wound, a pressurization roller 212 that is located to face the winding core 211 and provides a winding load to the metal hoop member 3 and the filler member 4 at the time of winding, a support member 213 that supports the pressurization roller 212 such that the pressurization roller 212 can be put into contact with, or separated from, the winding core 211, guide rollers 214 that guide the metal hoop member 3 fed from a winding roll 203A of the wound metal hoop member 3 to a position between the winding core 211 and the pressurization roller 213, and guide rollers 215 that guide the filler member 4 fed from a winding roll 204A of the wound filler member 4 to the position between the winding core 211 and the pressurization roller 213.

In the state of being wound as the winding roll 203A and the winding roll 204A, the metal hoop member 3 and the filler member 4 have a generally V-shaped cross-sectional shape, which forms the bent parts 2 in the spiral gasket 1.

The pressurization roller 212 has a recessed portion 212a formed in a radially outer surface thereof. The recessed portion 212a has a shape corresponding to the generally V-shape of the metal hoop member 3 and the filler member 4. The metal hoop member 3 and the filler member 4 are fit into the recessed portion 212a while being stacked and spirally wound around.

The spiral gasket 1 is produced by the spiral gasket production device 200 having such a structure as follows. First, only the metal hoop member 3 is inserted between the winding core 211 and the pressurization roller 212, and the winding core 211 is driven to rotate in a spiral direction while a predetermined winding load is applied to the metal hoop member 3 from the pressurization roller 212. Thus, the winding portion 6 is formed.

Next, the filler member 4 is inserted below the metal hoop member 3 between the winding core 211 and the pressurization roller 212, and the metal hoop member 3 and the filler member 4 are stacked and wound around to form the sealing portion 5.

Then, the supply of the filler member 4 to the position between the winding core 211 and the pressurization roller 212 is stopped, so that only the metal hoop member 3 is kept supplied to the position between the winding core 211 and the pressurization roller 212. Thus, the winding portion 7 is formed.

As shown in FIG. 4, in the sealing portion 5 of the spiral gasket 1 thus produced, the metal hoop member 3 and the filler member 4 both having a generally V-shaped cross-sectional shape are stacked such that the bent parts 2 overlap one another in a radial direction thereof.

As described above in detail, the spiral gasket 1 in this example has the sealing portion 5 having the following structure. The metal hoop member 3 having a cross-sectional shape including the bent parts 2 are spirally wound around such that the bent parts 2 overlap one another, and the filler member 4 is located between the winds of the metal hoop member 3 in the radial direction. The filler member 4 is formed of nickel, which is a non-iron metal material that has higher deformability than that of the metal hoop member 3. Therefore, the spiral gasket 1 is less influenced by thermal deterioration of a part of members thereof in high-temperature and high-pressure conditions than a conventional spiral gasket and thus is guaranteed to have stable sealing performance for a long time.

A reason why the spiral gasket 1 is guaranteed to have stable sealing performance is that sufficient compressibilty and sufficient compression recoverability, which are inherent characteristics of a spiral gasket, are fully provided. This will be described in more detail. The spiral gasket 1 is sufficiently compressible. Therefore, even when the spiral gasket 1 is attached to the gasket attachment portion 110 and a size thereof in the thickness direction is decreased, the spiral gasket 1 can be sufficiently deformed without being buckled. Thus, the spiral gasket 1 is well fit to the bottom end surface 101b and the bottom surface of the top end groove 102a. In addition, the spiral gasket 1 is sufficiently compression-recoverable. Therefore, even when the distance between the bottom end surface 101b and the bottom surface of the top end groove 102a is decreased or increased by the thermal expansion and contraction, the spiral gasket 1 can be sufficiently follow the changing distance. Namely, the spiral gasket 1 is guaranteed to follow the temperature change in the conditions of use.

Therefore, the spiral gasket 1 is less influenced by thermal deterioration when being heated than a conventional spiral gasket and thus is guaranteed to have stable sealing performance for a long time in high-temperature high-pressure conditions.

In addition, nickel is used as a non-iron metal material to form the filler member 4. Since nickel is high in heat resistance and corrosion resistance even at high temperature, and is higher in deformability than the metal hoop member 3. The spiral gasket 1 having such compressibility and compression recoverability can be used in high-temperature high-pressure conditions.

Since the filler member 4 is formed of nickel, the spiral gasket 1 is not thermally influenced almost at all even in high-temperature high-pressure conditions. Therefore, the spiral gasket 1 is usable in a steam having a temperature of 750°C and a pressure of 35 MPa. This allows the spiral gasket 1 to be applied to, for example, the field of fossil-fuel power generation, in which it has been attempted to provide higher efficiency by use of steam having higher temperature and higher pressure.

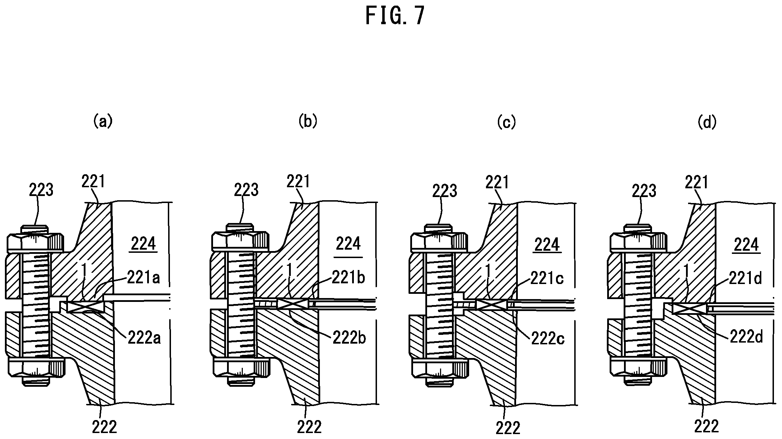

In the above example, the spiral gasket 1 is attached to the gasket attachment portion 110 having a closed structure. Alternatively, the spiral gasket 1 is usable between flanges of pipes that form any of pipe conduits 224 shown in FIG. 7.

FIG. 7 shows examples of use of the spiral gasket 1 in a flange structure that forms any of various pipe conduits 224 as described below. A pair of flanges 221 and 222 of pipes to be connected to each other are tightened by a tightening member 223, for example, a bolt and a nut to form a pipe conduit 224. In FIG. 7(a), one of the flanges, namely, the flange 222 has a ring-shaped groove 222a, and the spiral gasket 1 is located in the groove 222a. The other flange 221 has an integrally formed ring-shaped protrusion 221a facing the groove 222a.

In FIG. 7(b), on the entirety of the surfaces of the pair of flanges 221 and 222 facing each other, seating surfaces 221b and 222b are formed. The spiral gasket 1 is located between the pair of seating surfaces 221b and 222b to seal the gap between the flanges 221 and 222.

In FIG. 7(c), on radially inner portions of the surfaces of the pair of flanges 221 and 222 facing each other, planar seating surfaces 221c and 222c are formed. The spiral gasket 1 is located between the pair of seating surfaces 221c and 222c to seal the gap between the flanges 221 and 222.

In FIG. 7(d), one of the flanges, namely, the flange 222 has a ring-shaped cut-out portion 222d formed therein, and the other flange 221 has an integrally formed ring-shaped protrusion 221d corresponding to the cut-out portion 222d. The spiral gasket 1 is located between the cut-out portion 222d and the protrusion 221d to seal the gap between the flanges 221 and 222.

As can be seen, the spiral gasket 1 in example 1 described with reference to FIG. 1 and FIG. 2 can be used in any of the groove-type flange structure shown in FIG. 7(a), the flange structure including the seating surfaces on the entire surfaces of the flanges shown in FIG. 7(b), the flange structure including the planar seating surfaces shown in FIG. 7(c), and the fitting-type flange structure shown in FIG. 7(d).

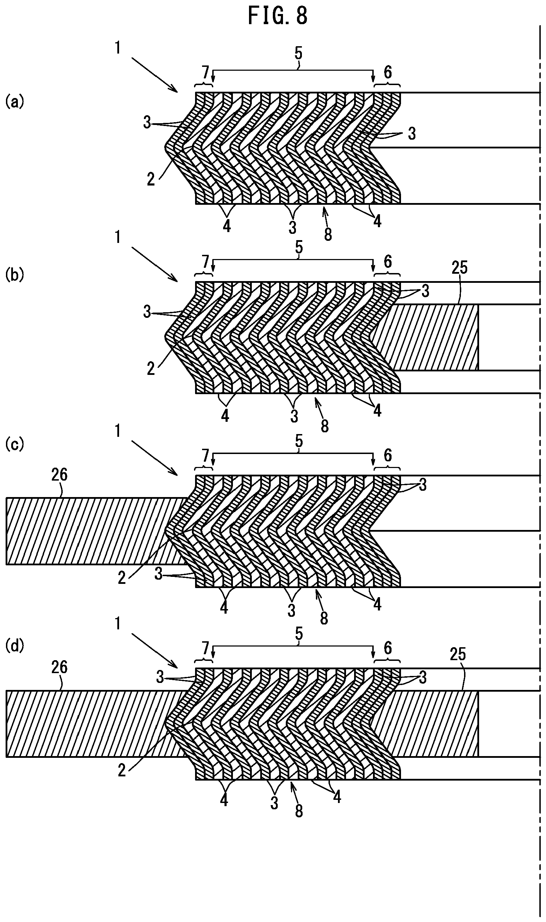

In the above description, the spiral gasket 1 includes only the gasket main body 8 including the sealing portion 5 and the winding portions 6 and 7 (see FIG. 8(a)). Alternatively, as shown in FIGS. 8(b) through 8(d), the spiral gasket 1 may include an inner ring or an outer ring in addition to the gasket main body 8.

The spiral gasket 1 described above is not limited to the one shown in FIG. 8 (a) and may alternatively be any of the spiral gaskets 1 shown in FIGS. 8(b) through 8(d). Which type of spiral gasket 1 is to be used may be determined in accordance with the structure of the gasket attachment portion to which the spiral gasket 1 is to be attached, for example, the flange structure as shown in FIG. 7.

The spiral gasket 1 shown in FIG. 8 (a) is a basic spiral gasket formed of the gasket main body 8 as described above.

The spiral gasket 1 shown in FIG. 8(b) includes an inner ring 25 in a portion radially inner to the gasket main body 8. The inner ring 25 is a reinforcing ring that prevents the gasket main body 8 from being deformed toward the radially inner side when the spiral gasket 1 is tightened by the tightening member 223. The inner ring 25 prevents buckling, provides durability against the high tightening force, and prevents the winds from being dispersed.

The spiral gasket 1 shown in FIG. 8(c) includes an outer ring 26 in a portion radially outer to the gasket main body 8. The outer ring 26 is a reinforcing ring that prevents the gasket main body 8 from being deformed or prevents the winds from being dispersed when the spiral gasket 1 is tightened by the tightening member 223. The outer ring 26 has a function of centering the spiral gasket 1 with respect to the gasket attachment portion 110 by use of the positional relationship with the tightening member 223.

The spiral gasket 1 shown in FIG. 8(d) includes the inner ring 25 in a portion radially inner to the gasket main body 8 and also the outer ring 26 in a portion radially outer to the gasket main body 8.

As can be seen, the spiral gasket 1 in this example is not limited to the one shown in FIG. 8(a) and may be any of the spiral gaskets 1 shown in FIGS. 8(b) through 8(d). With any of the structures, the spiral gasket 1 can provide the above-described effect.

### Example 2

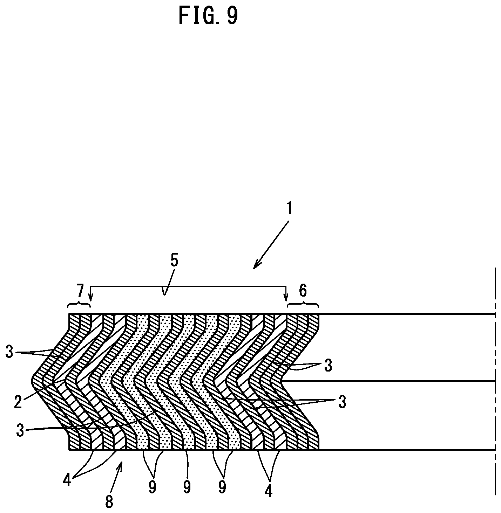

Now, a spiral gasket 1 shown in FIG. 9 will be described. FIG. 9 is a one-side cross-sectional view of the spiral gasket 1 having the following structure. A filler member includes the filler member 4 formed of nickel as a non-iron metal material and a filler member 9 formed of expanded graphite. The filler member 4 forms two or three winds in the radially inner portion and two or three winds in the radially outer portion in the sealing portion 5. The filler member 9 forms a portion between the radially inner portion and the radially outer portion, namely, a central portion in the spiral direction. In FIG. 9, the same elements as those of the other figures bear the same reference signs and detailed descriptions thereof will be omitted.

As described above, expanded graphite is produced by treating highly pure natural scale-like graphite crystal with a chemical and heat-treating the resultant substance at a high temperature of 1000°C or higher to expand gaps between layers of crystal lattice of graphite, thus to form flakes. As the material of the filler member 9, high grade expanded graphite that can be used at high temperature is desirable.

As described above, in the spiral gasket 1 in example 2 shown in FIG. 9, the filler member 4 in the radially outer portion and the radially inner portion in the sealing portion 5 is formed of nickel, which is a non-iron metal material, and the filler member 9 between the radially outer portion and the radially inner portion is formed of expanded graphite (preferably, of high grade). Therefore, in addition to having the effect described in example 1, the spiral gasket 1 in example 2 can suppress the oxidation and extinguishment of the expanded graphite (in general, expanded graphite is gradually oxidized and extinguished when the temperature exceeds 450°C in an oxidizable atmosphere) and steam oxidation (there is knowledge that in general, expanded graphite is oxidized by steam having a temperature exceeding 650°C) owing to the non-iron metal filler member 4.

The filler 9 in the portion of the sealing portion 5 between the radially outer portion and the radially inner portion may be formed of expanded graphite, which is highly cushionable. Therefore, the spiral gasket has high durability while providing the high sealability of the expanded graphite.

Namely, since the filler member 4 formed of a non-iron metal material is located in the radially outer portion and the radially inner portion of the sealing portion 5, the filler 9 located between the radially outer portion and the radially inner portion of the sealing portion 5 and formed of highly cushionable expanded graphite can be suppressed from being oxidized and extinguished. Thus the spiral gasket has high durability while providing the high sealability of the expanded graphite.

### Example 3

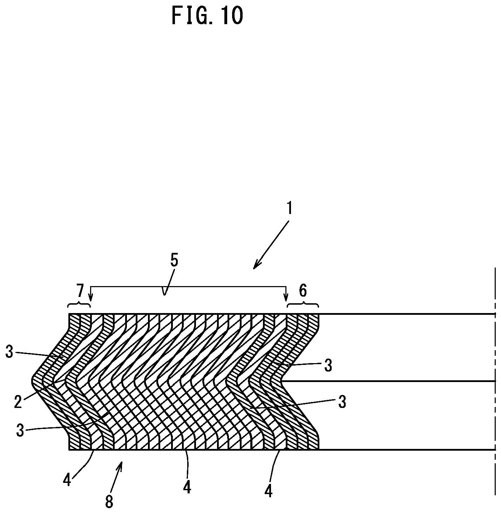

Now, a spiral gasket 1 shown in FIG. 10 will be described. FIG. 10 is a one-side cross-sectional view of the spiral gasket 1 having the following structure. The winding portions 6 and 7 are each formed by winding only the metal hoop member 3. A half of one wind in the radially inner portion and a half of one wind in the radially outer portion of the sealing portion 5 are each formed by winding a stack of the metal hoop member 3 and the filler member 4. A central portion between the radially inner portion and the radially outer portion of the sealing portion 5 is formed by winding only the filler member 4. In FIG. 10, the same elements as those of the other figures bear the same reference signs and detailed descriptions thereof will be omitted. The filler member 4 is formed of nickel, which is a non-iron metal material.

In each of the radially inner portion and the radially outer portion of the sealing portion 5, the stack of the metal hoop member 3 and the filler member 4 may be wound in the range of 1/4 of one wind to one wind. Each of the winding portions 6 and 7 formed of the metal hoop member 3 needs to include at least one wind in order to prevent the filler member 4 from flowing out toward the radially inner side of the radially outer side at high temperature.

As described above, in the spiral gasket 1 in example 3 shown in FIG. 10, the central portion between the radially inner portion and the radially outer portion of the sealing portion 5 is formed by spirally winding only the filler member 4 formed of nickel. The filler member 4 that is located between the radially inner portion and the radially outer portion of the sealing portion 5 and is formed of nickel is highly deformable, and therefore gaps formed between adjacent winds of the filler member 4 are small. Therefore, in addition to having the effect described in example 1, the spiral gasket 1 in example 3 can prevent fluids from permeating into the gaps and thus is guaranteed to have high sealability.

The filler member 4 is formed of nickel, which is a non-iron metal material, can maintain the shape thereof better than a soft material such as expanded graphite, an inorganic material or the like, and thus is guaranteed to have sufficient compressibility and sufficient recoverability, which are inherent characteristics of a spiral gasket.

For these reasons, the spiral gasket 1 is less influenced by thermal deterioration when being heated than a conventional spiral gasket and is high in heat resistance and corrosion guaranteed at high temperature while being guaranteed to have stable sealing performance for a long time.

### Example 4

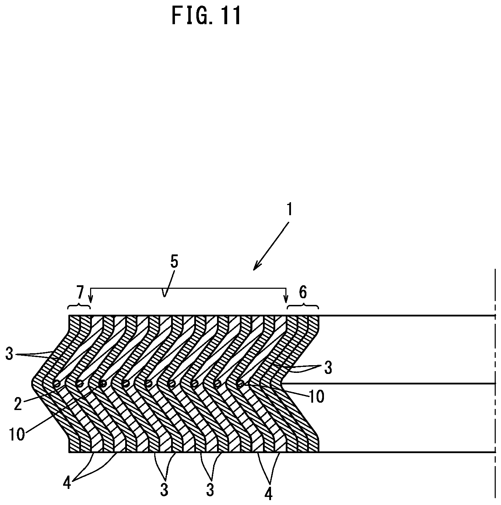

Now, a spiral gasket 1 shown in FIG. 11 will be described. FIG. 11 is a one-side cross-sectional view of the spiral gasket 1 having the following structure. In addition to the structure of the spiral gasket 1 in example 1, the spiral gasket 1 in example 4 includes a linear metal member 10 as a filling member. The linear metal member 10 is located in the sealing portion 5, more specifically, between a radially outer surface of each wind of the filler member 4 and a radially inner surface of a corresponding wind of the metal hoop member 3, at a position corresponding to the apexes of the generally V-shaped bent parts 2. In FIG. 11, the same elements as those of the other figures bear the same reference signs and detailed descriptions thereof will be omitted.

The linear metal member 10 is formed of a linear member having a circular cross-section. The linear member has a radius that is shorter than or equal to radius R of curvature of the bent part 2 of the metal hoop member 3 or the filler member 4, and has a diameter (line diameter) that is shorter than or equal to peak height H of the bent part 2 of the metal hoop member 3 and the filler member 4 and is longer than or equal to gap h between the peaks of the adjacent bent parts 2 of the metal hoop member 3 and the fitting member 4 (see FIG. 6).

In the case where, for example, the radius R of curvature is 0.5 mm, the peak height H is 1.6 mm, and the gap h between the peaks is 0.1 mm, a linear line member having a circular cross-section that has a diameter of 0.1 to 0.5 mm is usable. However, in order to avoid a gap that may be caused at any different position, it is preferable to use a linear line member having a circular cross-section that has a diameter of 0.1 to 0.2 mm.

Like the filler member 4, the linear metal member 10 is formed of nickel, which is a soft non-iron metal material that has deformability higher than or equivalent to that of the metal hoop member 3 and the filler member 4 and is heat-resistant and corrosion resistant even at high temperature.

It is now assumed that the linear metal member 10 is located between the radially inner surfaces of the filler member 4 and the radially outer surfaces of the metal hoop member 3, at a position corresponding to the apexes of the generally V-shaped bent parts 2, by use of the spiral gasket production device 200 shown in FIG. 5. In this case, referring to FIG. 5(a), the linear metal member 10 may be supplied from a position in the middle between the supply position of the filler member 4 and the supply position of the metal hoop member 3 (phantom line "a" in FIG. 5(a)), so that the linear metal member 10 can be wound together with the metal hoop member 3 and the filler member 4.

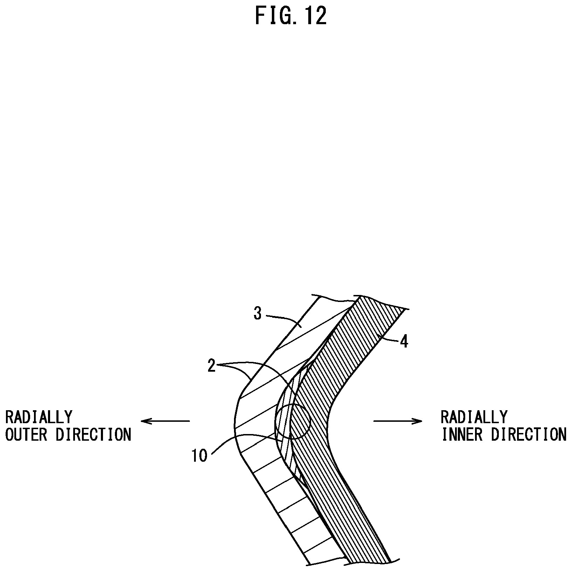

At the time of winding the members (metal hoop member 3, filler member 4, linear metal member 10), a winding load is applied to the linear metal member 10 by the pressurization roller 212. As a result, as shown in FIG. 12, the linear metal member 10 is plastically deformed to fill the gap between the bent parts 2 of the metal hoop member 3 and the filler member 4.

As described above, the linear metal member 10 is located as a filling member between the radially outer surface of each wind of the filler member 4 and the radially inner surface of a corresponding wind of the metal hoop member 3, at a position corresponding to the apexes of the bent parts 2. Owing to such a structure, the spiral gasket 1 in example 4 has the following effect in addition to the effect described in example 1. Even when a gap is formed between the bent parts 2 of the metal hoop member 3 and the filler member 4 (i.e., between facing surfaces of the metal hoop member 3 and the filler member 4), such a gap can be filled with the linear metal member 10. Therefore, the spiral gasket 1 can suppress a fluid such as steam having high temperature and high pressure or the like from permeating into the gap extending in the spiral direction and thus can prevent such permeation more certainly.

In the above description, the linear metal member 10 is located between the radially outer surface of each wind of the filler member 4 and the radially inner surface of a corresponding wind of the metal hoop member 3 in the sealing portion 5. Alternatively, the linear metal member 10 may be located between the radially inner surface of each wind of the filler member 4 and the radially outer surface of a corresponding wind of the metal hoop member 3 in the sealing portion 5. Still alternatively, the linear metal member 10 may be located between the radially outer surface of each wind of the filler member 4 and the radially inner surface of a corresponding wind of the metal hoop member 3 in the sealing portion 5 and also between the radially inner surface of each wind of the filler member 4 and the radially outer surface of a corresponding wind of the metal hoop member 3.

In order to locate the linear metal member 10, for example, between the radially inner surfaces of the filler member 4 and the radially outer surfaces of the metal hoop member 3 by use of the spiral gasket production device 200 shown in FIG. 5, the linear metal member 10 may be supplied from a position represented by phantom line "b" in FIG. 5(a). In order to locate the linear metal member 10 between the radially outer surfaces of the filler member 4 and the radially inner surfaces of the metal hoop member 3 of the sealing portion 5 and also between the radially inner surfaces of the filler member 4 and the radially outer surfaces of the metal hoop member 3, the linear metal member 10 may be supplied from both of the positions represented by phantom lines "a" and "b" in FIG. 5(a).

Instead of being provided along the entire length of the metal hoop member 3 and the filler member 4 of the sealing portion 5 in the spiral direction, the linear metal member 10 may be provided at a predetermined interval.

In the above description, the linear metal member 10 acting as the filling member is formed of nickel as an example of material that has deformability higher than or equivalent to that of the metal hoop member 3 and the filler member 4. Nickel has higher deformability than that of the metal hoop member 3 and is used for the filler member 4. There is no limitation on the material or the shape of the linear metal member 10. For example, the linear metal member 10 may be formed of a heat-resistant paste material that can be applied to the metal hoop member 3 or the filler member 4 before the metal hoop member 3 and the filler member 4 are wound together or a heat-resistant sheet material that can be attached both of the metal hoop member 3 or the filler member 4.

The linear metal member 10 is applicable to the spiral gasket 1 in example 2 including the filler member 4 and the filler member 9 and also to the spiral gasket 1 in example 3 in which the portion between of the radially inner portion and the radially outer portion of the sealing portion 5 is formed of only the filler member 4.

### Example 5

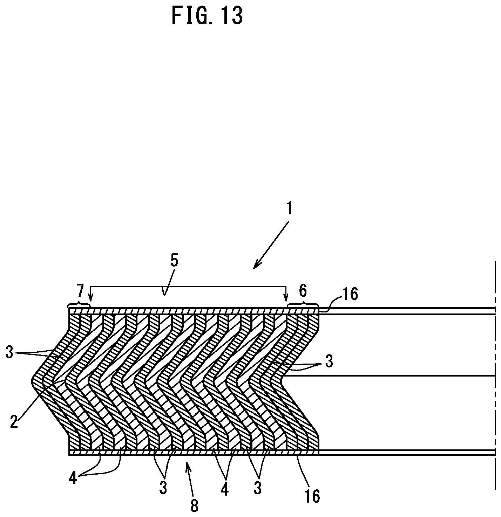

Now, a spiral gasket 1 having a structure shown in FIG. 13 will be described. FIG. 13 is a one-side cross-sectional view of the spiral gasket 1 having the following structure. In addition to the elements of the spiral gasket 1 in example 1, the spiral gasket 1 shown in FIG. 13 includes a metal plating layer 16 on both of two end surfaces of the sealing portion 5 in the thickness direction of the gasket main body 8. In FIG. 13, the same elements as those of the other figures bear the same reference signs and detailed descriptions thereof will be omitted.

The metal plating layer 16 is formed of a thin film of a heat-resistant soft metal material. The thin film may have a uniform or non-uniform thickness. The metal plating layer 16 may be formed of a plating layer of, for example, gold, silver, nickel or the like. Such a plating layer is formed by electric plating, chemical plating or the like.

As described above, the spiral gasket 1 includes the metal plating layer 16 such as an Ag plating layer, an Ni plating layer or the like on both of the two end surfaces of the sealing portion 5 in the thickness direction. Therefore, the spiral gasket 1 in example 5 has the following effect in addition to the effect described in example 1. Even when a slight gap is formed between facing surfaces of the metal hoop member 3 and the filler member 4 in the vicinity of the end surfaces of the sealing portion 5 in the thickness direction, such a slight gap can be filled, and also the adherence between the metal hoop member 3 and the filler member 4 can be improved. In addition, the fitness at the contact interface at which the attachment surface of the gasket attachment portion 110 and the sealing portion 5 contact each other (i.e., the contact interface of the bottom end surface 101b or the bottom surface of the top end groove 102a and the sealing portion 5) can be improved at the time of use of the spiral gasket 1. The metal plating layer 16 can prevent fluids from permeating into the gaps with more certainty.

In the above description, the metal plating layer 16 is formed on both of the two end surfaces of the spiral gasket 1. Alternatively, the metal plating layer 16 may be formed on either one of the two end surfaces of the spiral gasket 1. Still alternatively, the metal plating layer 16 may be formed on, for example, a part of such an end surface where the pressure is concentrated, instead of being formed on the entirety of such an end surface in the thickness direction of the spiral gasket 1. The metal plating layer 16 may be formed on the entirety of the filler member 4 formed of a non-iron metal material (nickel) before the filler member 4 is wound with the metal hoop member 3.

The metal plating layer 16 may be formed on both of, or either one of, the two end surfaces of the sealing portion 5 in the thickness direction in the spiral gaskets 1 in example 2, 3 or 4.

### Example 6

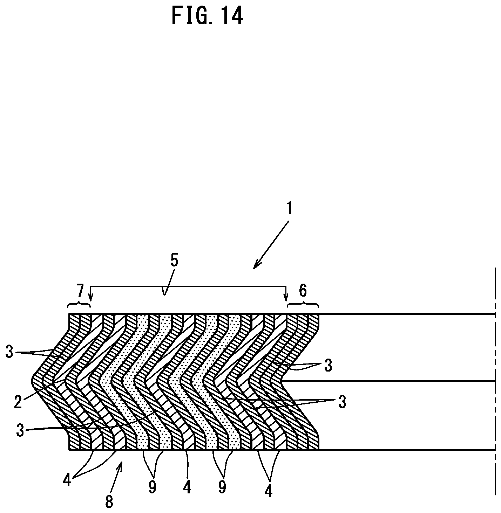

Now, a spiral gasket 1 having a structure shown in FIG. 14 will be described. FIG. 14 is a one-side cross-sectional view of the spiral gasket 1 having the following structure. In the spiral gasket 1, a filler member includes the filler member 4 formed of nickel as a non-iron metal material, and the filler member 9 formed of expanded graphite. The filler member 4 forms two or three winds in the radially inner portion and two or three winds in the radially outer portion in the sealing portion 5. The filler member 9 and the filler member 4 form a portion between the radially inner portion and the radially outer portion. In FIG. 14, the same elements as those of the other figures bear the same reference signs and detailed descriptions thereof will be omitted.

As described above, the central portion of the radially inner portion and the radially outer portion is formed of the filler member 9 of expanded graphite and the filler member 4 of nickel. Therefore, in addition to having the effect described in example 1, the spiral gasket 1 in example 6 has an advantage that the number of winds of the filler members 9 and 4 can be adjusted optionally in accordance with the conditions of use of the spiral gasket, and thus the spiral gasket 1 is made usable in a wider variety of applications.

The filler member according to the present invention corresponds to the filler member 4 formed of nickel and the filler member 9 formed of expanded graphite described in the examples; and similarly,
the filling member according to the present invention corresponds to the linear metal member 10 formed of nickel described in the example.

However, the present invention is not limited to the above-described examples.

For example, the linear metal member 10 formed of nickel may be replaced with a paste or sheet material.

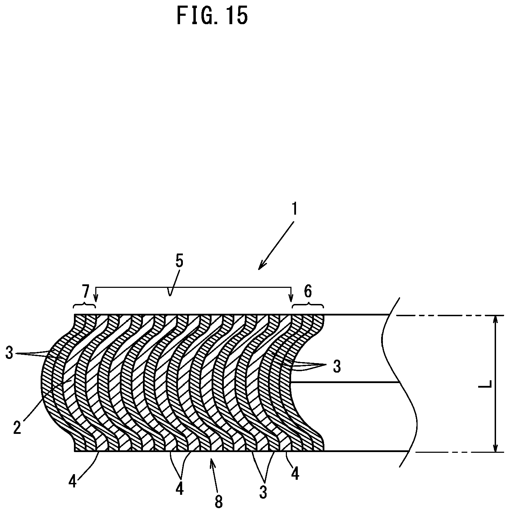

The following structure shown in FIG. 15 is also applicable. The metal hoop member 3 in the sealing portion 5 is formed of a metal thin plate having a generally U-shaped cross-sectional shape, namely, generally U-shaped bent parts 2. The metal hoop member 3 is spirally wound around to have a plurality of winds such that the U-shaped bent parts 2 of the winds overlap one another, and the filler member 4 as a cushioning member is located between the winds of the metal hoop member 3 in the radial direction. The metal hoop member 3 of such U-shaped bent parts 2 is also applicable to the spiral gasket 1 in example 2 including the filler member 4 and the filler member 9 and also to the spiral gasket 1 in example 3 in which the portion between the radially inner portion and the radially outer portion of the sealing portion 5 is formed of only the filler member 4. Even with such a structure, the effect of the spiral gasket 1 in example 1 is provided. In addition, no gap is formed between the U-shaped bent parts 2, and therefore the spiral gasket 1 is guaranteed to have more stable sealing performance for a long time.

### INDUSTRIAL APPLICABILITY

As described above, the present invention provides a spiral gasket including a sealing portion in which a metal hoop member having a bent cross-sectional shape is spirally wound around to form a plurality of winds such that the bent parts of the winds overlap one another, and a filler member is located between the winds in a radial direction.

### REFERENCE SIGNS LIST

- 1: Spiral gasket

- 2: Bent part
- 3: Metal hoop member
- 4, 9: Filler member
- 5: Stealing portion
- 8: Gasket main body
- 10: Linear metal member (filling member)
- 16: Metal plating layer

## Claims

1. A spiral gasket (1), comprising a sealing portion (5) including:
a metal hoop member (3) that has a cross-sectional shape including bent parts and is spirally wound around to have a plurality of winds such that the bent parts of the winds overlap one another; and
a filler member (4) located between the winds of the metal hoop member (3) in a radial direction;
the metal hoop member (3) is formed of nickel alloys; **characterised in that** at least a part of the filler member (4) in a spiral direction is formed of a pure nickel having deformability that is higher than that of the metal hoop member (3); and
the filler member (4) has a thickness that is set to the range of 0.1 to 0.4 mm.

2. A spiral gasket according to claim 1, wherein the filler member (4) in the sealing portion (5) is formed of only the pure nickel.

3. A spiral gasket according to claim 1, wherein:
a radially outer portion and a radially inner portion of the filler member (4) in the sealing portion (5) are formed of the pure nickel; and
a portion of the filler member (4) between the radially outer portion and the radially inner portion is formed of expanded graphite.

4. A spiral gasket according to claim 1, wherein the sealing portion (5) is formed as a result of only the filler member (4) formed of the pure nickel being spirally wound around.

5. A spiral gasket according to any one of claims 1 through 4, further comprising a filling member located at a position corresponding to the bent parts of the overlapping winds.

6. A spiral gasket according to any one of claims 1 through 5, further comprising a metal plating layer provided on at least one end surface of the sealing portion (5) in a thickness direction of a gasket main body.

## Patentansprüche

1. Spiraldichtung (1), umfassend einen Dichtungsabschnitt (5), mit:
ein Metallringelement (3), das eine Querschnittsform mit gebogenen Teilen aufweist und spiralförmig herumgewickelt ist, um eine Vielzahl von Windungen aufzuweisen, so dass die gebogenen Teile der Windungen einander überlappen, und
ein Füllelement (4), das in radialer Richtung zwischen den Windungen des Metallringelements (3) angeordnet ist;
wobei das Metallringelement (3) aus Nickellegierungen gebildet ist, **dadurch gekennzeichnet, dass**
zumindest ein Teil des Füllelements (4) in einer Spiralrichtung aus einem reinen Nickel mit einer höheren Verformbarkeit als das Metallringelement (3) gebildet ist, und
das Füllelement (4) eine Dicke aufweist, die im Bereich von 0,1 bis 0,4 mm eingestellt ist.

2. Spiraldichtung nach Anspruch 1, wobei das Füllelement (4) in dem Dichtungsabschnitt (5) nur aus dem reinen Nickel gebildet ist.

3. Spiraldichtung nach Anspruch 1, wobei
ein radial äußerer Abschnitt und ein radial innerer Abschnitt des Füllelements (4) in dem Dichtungsabschnitt (5) aus dem reinen Nickel gebildet sind, und
ein Abschnitt des Füllelements (4) zwischen dem radial äußeren Abschnitt und dem radial inneren Abschnitt aus expandiertem Graphit gebildet ist.

4. Spiraldichtung nach Anspruch 1, wobei der Dichtungsabschnitt (5) dadurch gebildet wird, dass nur das aus dem reinen Nickel gebildete Füllelement (4) spiralförmig herumgewickelt wird.

5. Spiraldichtung nach einem der Ansprüche 1 bis 4, ferner umfassend ein Füllelement, das an einer Position angeordnet ist, die den gebogenen Teilen der überlappenden Windungen entspricht.

6. Spiraldichtung nach einem der Ansprüche 1 bis 5, ferner umfassend eine Metallplattierungsschicht, die auf wenigstens einer Endfläche des Dichtungsabschnitts (5) in einer Dickenrichtung eines Dichtungshauptkörpers vorgesehen ist.

## Revendications

1. Joint en spirale (1) comprenant une partie d'étanchéité (5) qui comporte :
un élément formant un cerceau métallique (3) dont la forme en section comporte des parties cintrées et qui s'enroule en spirale pour former plusieurs spires de telle sorte que les parties coupées des spires se chevauchent ; et
un élément de remplissage (4) situé entre les spires de l'élément formant un cerceau métallique (3) dans un sens radial ;
l'élément formant un cerceau métallique (3) étant fait d'alliages de nickel, **caractérisé en ce qu'**une partie au moins de l'élément de remplissage (4) dans le sens de la spirale est faite d'un nickel pur ayant une déformabilité supérieure à celle de l'élément formant un cerceau métallique (3) et
l'élément de remplissage (4) a une épaisseur comprise entre 0,1 et 0,4 mm.

2. Joint en spirale selon la revendication 1, dans lequel l'élément de remplissage (4) dans la partie d'étanchéité (5) est fait uniquement du nickel pur.

3. Joint en spirale selon la revendication 1, dans lequel
une partie extérieure dans le sens radial et une partie intérieure dans le sens radial de l'élément de remplissage (4) dans la partie d'étanchéité (5) sont faites du nickel pur
et
une partie de l'élément de remplissage (4) entre la partie extérieure dans le sens radial et la partie intérieure dans le sens radial est faite de graphite expansé.

4. Joint en spirale selon la revendication 1, dans lequel la partie d'étanchéité (5) est formée par le fait que seul l'élément de remplissage (4) fait uniquement de nickel pur est enroulé en spirale.

5. Joint en spirale selon l'une des revendications 1 à 4, comprenant en outre un élément de remplissage situé dans une position correspondant aux parties cintrées des spires qui se chevauchent.

6. Joint en spirale selon l'une des revendications 1 à 5, comprenant en outre une couche de placage métallique prévue sur au moins une surface d'extrémité de la partie d'étanchéité (5) dans le sens de l'épaisseur d'un corps principal de joint.
